# EUROPEAN PATENT APPLICATION

(11) **EP 4 465 220 A1**
(43) Date of publication of application: **20.11.2024**
(21) Application number: 23743437.8
(22) Date of filing: 17.01.2023
(51) Int. Cl.: G06Q 10/08, G06Q 10/10, G06Q 50/00, G06Q 50/30

(54) **SYSTEM FOR PROVIDING REAL-TIME CARGO HISTORY MANAGEMENT SERVICE BASED ON CARGO TRACKING API LINKAGE**

(30) Priority: 19.01.2022 KR 20220007597
(71) Applicant: Cho, Young Soung, Gwangjin-gu, Seoul 05065 (KR)
(72) Inventor: KIM, Ji Young, Seoul 05065 (KR); CHO, Euodia, Seoul 05065 (KR); CHO, Young Soung, Seoul 05065 (KR)
(74) Representative: Sander, Rolf
(86) International application number: PCT/KR2023/000804
(87) International publication number: WO 2023/140590

(57) **Abstract**

The present invention relates to a system for providing a cargo history management service based on cargo tracking API linkage, the system comprising a service providing server, a user terminal, and a cargo location providing server. The service providing server of the present invention comprises: an order management unit for creating an order sheet when a transport request including at least one of orderer information, a cargo import/export port, an arrival port, a ship company name, a ship name, a departure date, an arrival date, the number of packages, a weight, and a volume is received from the user terminal; a settlement management unit for generating a settlement statement in real time on the basis of the order sheet created by the order management unit, and requesting settlement from the user terminal; and a transport management unit for, when cargo transport is initiated, tracking a location of cargo from the cargo location providing server in real time so as to provide same to the user terminal. Real-time cargo tracking and cargo history management are possible on a mobile application or a web page. In addition, by breaking a traditional forwarder scheme, quick sharing is possible using digital data, and automatic estimate comparison is possible on a platform.

## Description

### BACKGROUND

### Technical Field

The present invention relates to a system for providing real-time cargo history management service based on cargo tracking API linkage, and to a method and system for providing real-time cargo history management service based on cargo tracking API linkage capable of enabling intuitive confirmation of a current cargo location and enabling real-time end-to-end cargo history management on land and sea.

### Background Art

Import or export companies that export or import products overseas handle all tasks related to import/export logistics through a forwarding company rather than autonomously handling the tasks. The forwarding company is a logistics service company that comprehensively handles import and export logistics tasks such as customs clearance, including a task for handing over import and export logistics from an import/export company and transporting products.

When most forwarding companies receive a request for an export or import logistics estimate from an import/export company, the forwarding companies calculate a logistics cost by hand, create a estimate, and send the estimate via email.

Further, since detailed information for imported or exported goods is required in order to calculate an accurate maritime logistics cost, and several incidental costs may be incurred according to a law of an export or import country, forwarding companies usually request such information from export or import companies, and the import and export companies must communicate with the forwarding company at least two or three times via email or phone in order to receive a final estimate for the maritime logistics cost. In particular, when an export or import item is a mechanical apparatus, it may take a considerable amount of time to deliver the export or import product since the import/export companies are not familiar with an import/export task. Further, in the case of machines, since the same product is not an item that is exported and imported in large quantities, there is a disadvantage that several communications must be performed with a forwarding company each time for machine export or import.

Further, due to these procedural inconveniences, most import and export companies often continue to transact with existing forwarding companies, and it is not easy to directly compare maritime logistics costs. Accordingly, there is a continuous demand from export and import companies to receive estimates for sea transport more quickly and to receive information for complex logistics systems and logistics costs from ship owners and forwarding companies more transparently. In addition, a function of tracking a current location in real time during transport is required.

Prior patents include Registered Patent No. 10-1831908 (Real-time cargo location tracking system using transport vehicles), which discloses only technology for ascertaining a location of a transport skid for utilizing a sensor mounted on a transport vehicle to track a location and movement of the transport vehicle and transporting cargo through the tracking, and a location of the cargo.

### SUMMARY

An object of the present disclosure is to provide a system for providing real-time cargo history management service based on cargo tracking API linkage capable of enabling intuitive confirmation of a current cargo location and enabling real-time end-to-end cargo history management on land and sea.

A system for providing real-time cargo history management service based on cargo tracking API linkage, the system including a service providing server, a user terminal, and a cargo location providing server, wherein the service providing server includes an order management unit configured to create an order when the order management unit receives a transport request including at least one of orderer information, a cargo import/export port, an arrival port, a ship company name, a ship name, a departure date, an arrival date, number of packages, a weight, and a volume from the user terminal; a settlement management unit configured to generate a settlement statement in real time based on the order created by the order management unit and request settlement from the user terminal; and a transport management unit configured to track a location of cargo in real time from the cargo location providing server and provide the location to the user terminal when cargo transport is initiated.

The service providing server further includes a forwarding unit configured to select a transport means based on the order created by the order management unit and process at least one of a customs task, an import/export task, a customs clearance task, and an incidental task related to transport.

The service providing server further includes a warehouse management unit configured to manage warehouses for each orderer based on the orderer information.

When the transport management unit receives a cargo tracking request from the user terminal, the transport management unit receives a current location of the cargo from the cargo location providing server in real time, and provides real-time tracking information so that an initial departure point, a departure time, import/export port, a transit time, and a current location of the cargo are displayed to the user terminal.

The real-time tracking information is able to be shared through at least one of a social network service, a messenger, and a memo, and the system further includes a communication unit capable of sharing a link to the real-time tracking information in real time.

### ADVANTAGEOUS EFFECTS

According to the present invention, it is possible to intuitively perform cargo tracking and cargo history management in real time in a mobile application or web page. It is also possible to quickly share digital data without using a traditional forwarder scheme, and to perform an automatic estimate comparison on a platform.

It is also possible to manage digitally created documents safely and conveniently, and to eliminate real-time online tracking and waste through an automatic notification.

It is also possible to provide an integrated logistics solution that supports various industries through multilingual support, HTML5-based OMS reflection for standardization, and mobile-friendly approach.

### BRIEF DESCRIPTION OF THE DRAWINGS

FIG. 1 is a configuration diagram illustrating a system for providing real-time cargo history management service based on cargo tracking API linkage according to an embodiment of the present invention.
FIGS. 2 and 3 are illustrative diagrams illustrating the cargo history management web page service based on real-time cargo tracking API linkage of the present invention.
FIGS. 4 to 6 are illustrative diagrams illustrating a cargo history management application service based on real-time cargo tracking API linkage in an embodiment of the present invention.

### DESCRIPTION OF EXEMPLARY EMBODIMENTS

Specific structural or functional description of embodiments according to the concept of the present invention disclosed in herein are merely illustrative for the purpose of describing the embodiments according to the concept of the present invention. The embodiments according to the concept of the present invention may be implemented in various forms and the present invention are not limited to the embodiments described herein.

Since the embodiments according to the concept of the present invention can be subjected to various changes and have various forms, the embodiments will be illustrated in the drawings and described in detail in the present specification. However, this is not intended to limit the embodiments according to the concept of the present invention to specific disclosed forms, and includes all changes, equivalents, or substitutes included in the spirit and technical scope of the present invention.

The terms used in the present specification are only used to describe specific embodiments and are not intended to limit the present invention. Singular expressions include plural expressions unless the context clearly dictates otherwise. In the present specification, it should be understood that terms such as "comprise" or "have" are intended to designate the presence of features, numbers, steps, operations, components, parts, or combinations thereof described in the present specification, and does not exclude a possibility of the existence or addition of one or more other features, numbers, steps, operations, components, parts, or combinations thereof in advance.

Hereinafter, the embodiments of the present invention will be described in detail with reference to the drawings attached to the present specification.

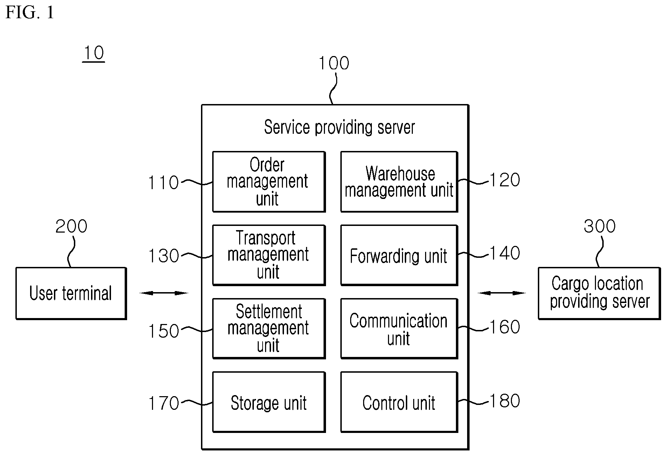

FIG. 1 is a configuration diagram illustrating a system for providing real-time cargo history management service based on cargo tracking API linkage according to an embodiment of the present invention.

Referring to FIG. 1, it includes a service providing server 100, a user terminal 200, and a cargo location providing server 300. An orderer may enter product information for a product that the orderer wishes to transport through a dedicated application installed on a user terminal. The orderer may perform user authentication by transferring previously entered orderer information to the service providing server.

When the service providing server 100 receives a transport request from the user terminal 200, the service providing server 100 may manage an order, automatically create an order, manage a warehouse for each orderer, performs all forwarding-related tasks, automatically perform settlement to request a payment in real time, receive a current location from the cargo location providing server, generate tracking information, and provide the tracking information to the user terminal in real time. The service providing server 100 may provide the tracking information to the user terminal in real time to enable end-to-end cargo history management that is confirmed through an intuitive interface.

The service providing server 100 can be linked to a large number of user terminals and cargo location providing servers through API linkage for real-time cargo tracking.

The service providing server 100 includes an order management unit 110, a warehouse management unit 120, a transport management unit 130, a forwarding unit 140, a settlement management unit 150, a communication unit 160, a storage unit 170, and a control unit 180.

The order management unit 110 automatically creates an order when the order management unit 110 receives a transport request including at least one of orderer information, a cargo import/export port, an arrival port, a ship company name, a ship name, a departure date, an arrival date, number of packages, a weight, and a volume from the user terminal. According to the embodiment, a transport request that includes at least one input means for inputting ship cargo item information, ship cargo transport information, and ship cargo freight estimate information, the number of containers held according to ships operated by at least one ship owner, ship operation information (transport time, transit section, and departure/arrival date), information on a quantity of ship cargo that can be transported, shipping freight information for each shipping section according to the number of ship cargoes, a standard of a container of a ship on which ship cargo will be loaded, container number, container seal number, and container location information, differential service usage fee based on ship cargo transport request information, shipping freight, the number of containers held according to ships operated by the ship owner, the ship operation information (transport time, transit section, and departure/arrival date), the information on a quantity of ship cargo that can be transported, and shipping information and shipping freight information for each shipping section depending on the number of ship cargoes may be received. The description in the present specification focuses on a ship, but the present disclosure is not limited thereto and can also be applied to aviation.

The warehouse management unit 120 manages warehouses for each orderer based on the orderer information. The warehouse management unit 120 may be linked to a logistics automation facility control system based on Internet of Things to perform automatic warehouse, automated shipping equipment, automatic sorter, and AGV functions.

When cargo transport is initiated, the transport management unit 130 tracks a location of the cargo in real time from the cargo location providing server and provides the location to the user terminal. When the transport management unit 130 receives a cargo tracking request from the user terminal, the transport management unit 130 receives a current location of the cargo from the cargo location providing server in real time, and provides real-time tracking information so that an initial departure point, a departure time, import/export port, a transit time, and a current location of the cargo are displayed to the user terminal.

The forwarding unit 140 selects a transport means based on the order created by the order management unit and processes at least one of a customs task, an import/export task, a customs clearance task, and an incidental task related to transport.

The settlement management unit 150 generates a settlement statement in real time based on the order created by the order management unit and requests the user terminal to perform settlement. The settlement management unit 150 may analyze and extract ship owner information that matches ship cargo transport information of ship owner information, analyzes an item, number, weight, volume, and HS code of the ship cargo, analyze whether the ship cargo is a regional specialty to calculate a freight fee that is a sum of a shipping freight and a preset service_fee suggested by the extracted ship owner information, analyze and extract at least one ship owner information that can accommodate the ship cargo, analyze and extract at least one ship owner information including a transport route of the ship cargo among the extracted at least one ship owner information, provide ship owner information presenting ship freight information in descending order of matching rank with the ship cargo freight estimate information among the at least one extracted ship owner information, in descending or ascending order, differently determine a commission with a preset margin depending on a volume of the ship cargo, the presence or absence of regional special ship cargo, a weight of the ship cargo, and characteristics of an item, and provide the commission.

The communication unit 160 shares a link of the real-time tracking information in real time. The real-time tracking information can be shared through at least one of a social network service, a messenger, and a memo. The communication unit 160 communicates with the user terminal 200 and the cargo location providing server 300 through a network, and the network includes a local area network (LAN), a wide area network (WAN), a value added network (VAN), a mobile radio communication network, a satellite communication network, and a combination thereof, is a data communication network having a comprehensive meaning that allows network constituent entities illustrated in FIG. 1 to smoothly communicate with each other, and may include wired Internet, wireless Internet, and a mobile wireless communication network. Further, wireless communication includes, for example, wireless LAN (Wi-Fi), Bluetooth, Bluetooth low energy, ZigBee, WFD (Wi-Fi Direct), UWB (ultra wideband), infrared communication (IrDA; infrared Data Association), and NFC (Near Field Communication), but are not limited thereto.

The storage unit 170 can store the generated order and real-time tracking information.

The control unit 180 includes operating installed software for control each configuration of the service providing server, and may control the order management unit 110, the warehouse management unit 120, the transport management unit 130, the forwarding unit 140, the settlement management unit 150, the communication unit 160, and the storage unit 170. The control unit 180 may perform a function of creating an API that is provided to the user terminal and managing the provided API.

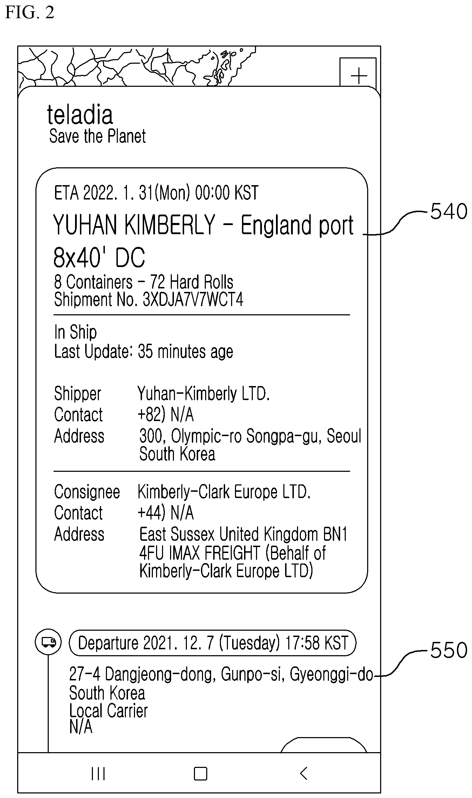

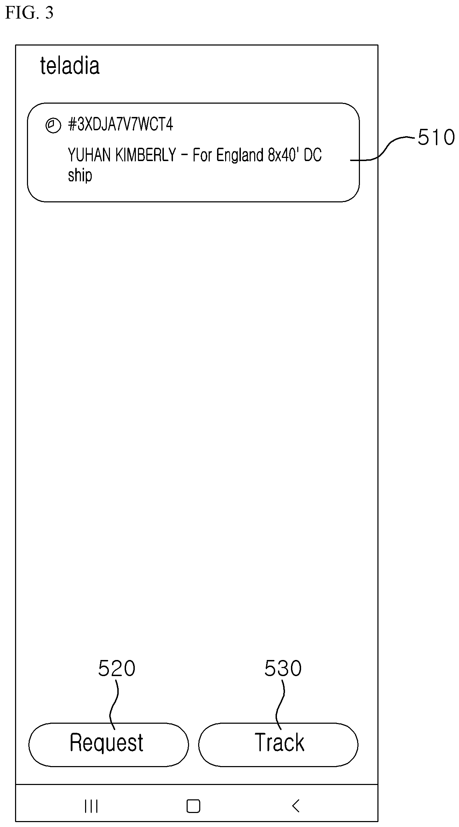

FIGS. 2 and 3 are illustrative diagrams showing the cargo history management web page service based on real-time cargo tracking API linkage of the present invention.

Referring to FIGS. 2 and 3, FIGS. 2 and 3 are illustrative diagrams showing real-time tracking information displayed on a web page-based user terminal, and a land departure point 420, a land destination and sea departure point 430, an information window 410 for displaying information for a sea transit point and a sea destination, and a current location, and a straight line 440 connecting the land departure point to the current location are displayed for intuitive confirmation. Further, orderer information, order information, and attached files may be shown (450).

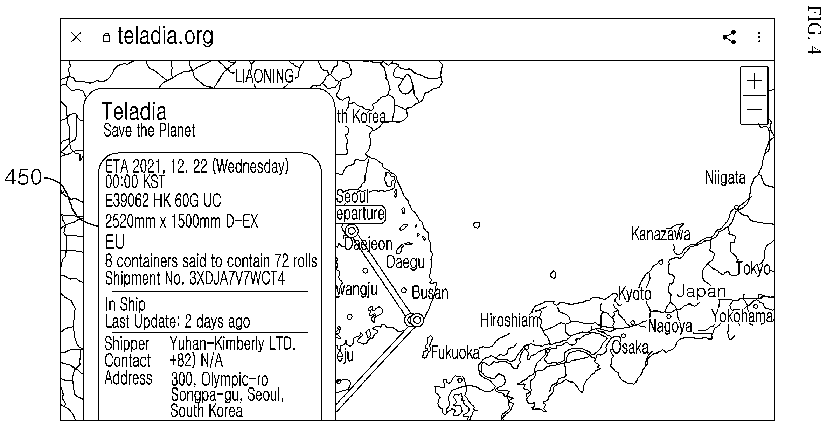

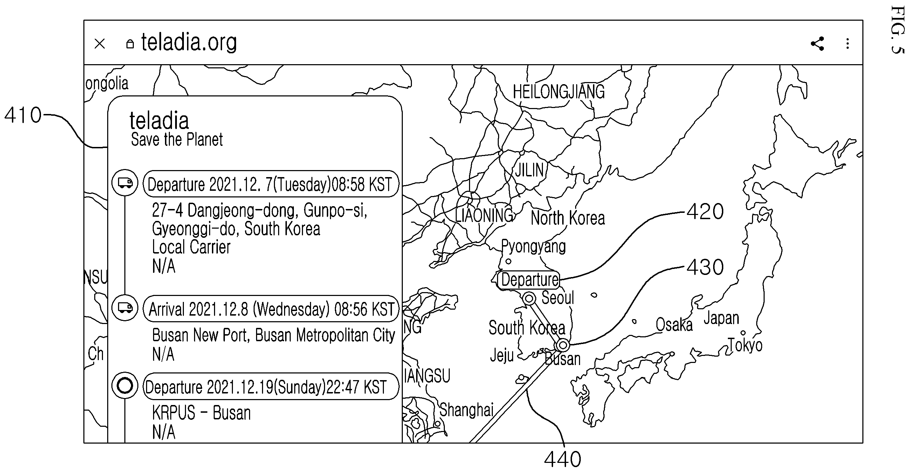

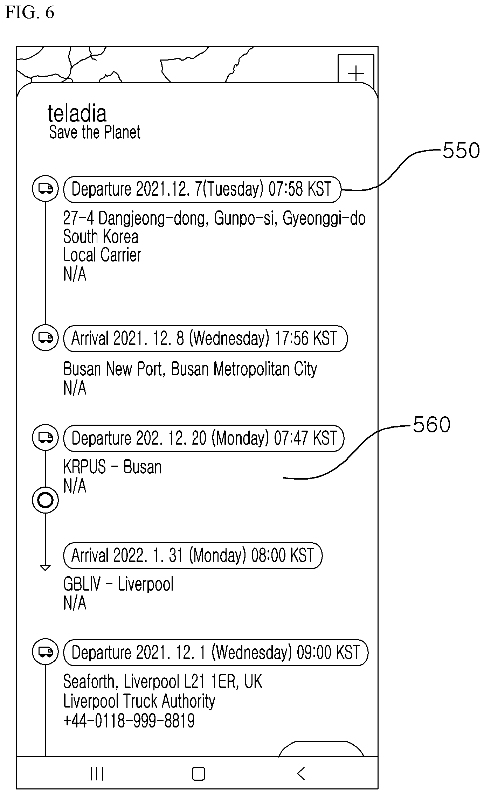

FIGS. 4 to 6 are illustrative diagrams illustrating a cargo history management application service based on real-time cargo tracking API linkage in an embodiment of the present invention.

Referring to FIGS. 4 to 6, the user terminal may select an order request 520 and tracking 530 in a mobile application service. When the order request 520 is selected, essential information, end-to-end information, book document upload, and a template to fill out requests are provided, and text and information of an uploaded document can be scanned with OCR so that the text and information are automatically input.

Further, when the order request has already been completed, transport information 510 may be displayed in an upper portion. When the transport information is selected, detailed information may be displayed (540) and tracking information 550 and 560 may be displayed. The tracking information may be displayed separately as tracking information 550 for land and tracking information 560 for sea.

The invention has been described with reference to the embodiments shown in the drawings, but this is merely illustrative, and those skilled in the art will understand that various modifications and other equivalent embodiments are possible therefrom. Therefore, the true scope of technical protection of the present invention should be determined by the technical spirit of the attached registered claims.

## Claims

1. A system for providing real-time cargo history management service based on cargo tracking API linkage, the system comprising a service providing server, a user terminal, and a cargo location providing server, wherein
the service providing server includes
an order management unit configured to create an order when the order management unit receives a transport request including at least one of orderer information, a cargo import/export port, an arrival port, a ship company name, a ship name, a departure date, an arrival date, number of packages, a weight, and a volume from the user terminal;
a settlement management unit configured to generate a settlement statement in real time based on the order created by the order management unit and request settlement from the user terminal; and
a transport management unit configured to track a location of cargo in real time from the cargo location providing server and provide the location to the user terminal when cargo transport is initiated.

2. The system for providing real-time cargo history management service based on cargo tracking API linkage of claim 1, wherein the service providing server further includes a forwarding unit configured to select a transport means based on the order created by the order management unit and process at least one of a customs task, an import/export task, a customs clearance task, and an incidental task related to transport.

3. The system for providing real-time cargo history management service based on cargo tracking API linkage of claim 2, wherein the service providing server further includes a warehouse management unit configured to manage warehouses for each orderer based on the orderer information.

4. The system for providing real-time cargo history management service based on cargo tracking API linkage of claim 3, wherein, when the transport management unit receives a cargo tracking request from the user terminal, the transport management unit receives a current location of the cargo from the cargo location providing server in real time, and provides real-time tracking information so that an initial departure point, a departure time, import/export port, a transit time, and a current location of the cargo are displayed to the user terminal.

5. The system for providing real-time cargo history management service based on cargo tracking API linkage of claim 1, wherein
the real-time tracking information is able to be shared through at least one of a social network service, a messenger, and a memo, and
the system further includes a communication unit capable of sharing a link to the real-time tracking information in real time.
